# FASCICULE DE BREVET EUROPEEN

(11) **EP 1 859 978 B1**
(45) Date de publication et mention de la délivrance du brevet: **22.12.2010**
(21) Numéro de dépôt: 07301040.7
(22) Date de dépôt: 15.05.2007
(51) Int. Cl.: B60J 5/04, B60R 7/04, B60R 13/08

(54) **Feuille thermoplastique à masse adhésive pour élément de carrosserie**
Thermoplastische Folie mit Klebemasse für Karosserieelement
Thermoplastic sheet with adhesive mass for a body element

(30) Priorité: 22.05.2006 FR 0604641
(43) Date de publication de la demande: 28.11.2007
(73) Titulaire: Sofitec SA, 78530 Buc (FR)
(72) Inventeur: Proux, Olivier, 78220, VIROFLAY (FR)
(74) Mandataire: Bloch & Bonnétat

(56) Documents cités:
- EP-A- 1 046 527
- DE-A1- 3 510 018
- DE-A1- 19 711 598
- DE-U1- 9 100 513
- DE-U1- 9 210 663
- DE-U1- 9 415 588
- FR-A1- 2 837 156
- US-A- 4 932 315
- US-A- 5 456 513
- US-B1- 6 676 195

## Description

La présente invention concerne une feuille notamment d'étanchéité et/ou d'isolation acoustique ou d'absorption acoustique pour un élément de carrosserie, en particulier pour véhicule automobile, cette feuille étant montée entre une tôle et un panneau de finition constituant une garniture intérieure.

Dans l'état de la technique, des feuilles en matière thermoplastique sont destinées à être posées et fixées sur les tôles de caisson des portières de véhicule automobile, du côté interne au véhicule, à des fins notamment d'étanchéité des caissons des portières, en tant qu'éléments de carrosserie.

Une feuille d'étanchéité peut constituer l'un des éléments d'un panneau d'étanchéité et d'insonorisation comportant en outre, comme autre élément, un film ou une couche d'une matière thermoplastique du même type, qui renforce l'étanchéité et l'insonorisation. Le panneau est thermoformé pour être adapté à la forme de la face intérieure de la portière de véhicule.

Un cordon de matière adhésive continu ou discontinu est déposé sur la face de la feuille d'étanchéité opposée à celle supportant le film en matière plastique et permet de fixer le panneau par collage sur un support tel que la tôle de la portière.

En fin de fabrication, les panneaux thermoformés sont recouverts chacun d'un séparateur de protection temporaire amovible et sont empilés à plat les uns sur les autres pour être livrés aux constructeurs de véhicules automobiles. Le séparateur de protection tel qu'une feuille protectrice en papier siliconé ou analogue est posé soit sur le cordon adhésif de chaque panneau, soit entre deux panneaux empilés pour permettre l'empilage de ces panneaux et leur séparation sans peine. Pour poser un panneau, on retire la feuille de papier protectrice, on applique le panneau à l'endroit voulu sur la tôle support et on exerce une pression sur la face libre du panneau, c'est-à-dire sur le film, au niveau du cordon de colle pour bien appuyer sur celui-ci et assurer un bon collage du panneau sur la tôle support ainsi que l'étanchéité de l'assemblage.

Ensuite, le panneau de finition intérieur est fixé sur la tôle support notamment par clipsage, le panneau d'étanchéité se trouvant entre la tôle support et le panneau de finition intérieur.

La feuille protectrice, par exemple en papier siliconé, peut présenter une surface imparfaitement plane, jonchée de plis et de bourrelets, dus à un froissage et/ou un séchage du papier lors de l'adhésivage de la feuille de papier sur le panneau. Les imperfections surfaciques de la feuille de papier protectrice ainsi posée affaiblissent partiellement l'adhésivité du cordon adhésif ce qui peut amoindrir la fixation ultérieure de la feuille d'étanchéité contre la tôle support.

Les variations dimensionnelles de la feuille protectrice soumise aux conditions de transport peuvent créer des défauts géométriques sur le cordon adhésif.

En outre la feuille de papier protectrice doit être retirée avant la fixation de celle-ci contre la tôle support de caisson de portière, cette opération de retrait de feuille protectrice devant être répétée pour chaque portière.

Une telle feuille est connu du document US 4932315 qui correspond au préambule de la revendication indépendante.

L'invention a pour objectif de remédier à ces inconvénients et particulièrement de supprimer la feuille de papier protectrice de manière à ce que la feuille notamment du type feuille d'étanchéité et/ou d'isolation acoustique ou d'absorption acoustique, ou tout panneau notamment du type panneau d'étanchéité et/ou d'isolation acoustique ou d'absorption acoustique incluant la feuille de l'invention, soit prêt à être posé sur une tôle support tout en permettant un empilage de feuilles et conservant la forme et l'adhésivité de cordons de matière adhésive pendant le transport des feuilles.

Pour atteindre cet objectif, une feuille en matière thermoplastique ayant une face supportant une masse adhésive destinée à être appliquée contre une tôle d'un élément de carrosserie de véhicule, est caractérisée en ce que ladite face supportant la masse adhésive comprend au moins une saillie ayant une hauteur sensiblement supérieure à l'épaisseur de la masse adhésive, située au moins partiellement à proximité de la masse adhésive et thermoformée avec la feuille, de sorte que lors de l'empilement d'une deuxième feuille, la deuxième feuille soit au moins partiellement supportée par la saillie.

Grâce à la hauteur de la saillie sensiblement supérieure à l'épaisseur de la masse adhésive telle qu'un cordon de matière adhésive ou un revêtement adhésif continu ou discontinu, et à la situation de la saillie à proximité de la masse adhésive, la masse adhésive est partiellement protégée contre tout contact susceptible de l'endommager avec une autre feuille empilée avec elle pendant le stockage et le transport d'une pile de feuilles et avant la pose des feuilles et conserve sa forme et son adhésivité pour la pose de la feuille contre la tôle de l'élément de carrosserie. Ladite autre feuille empilée peut être en contact pour partie avec la ou des saillies ayant une hauteur sensiblement supérieure à l'épaisseur de la masse de matière adhésive et pour partie avec la masse adhésive. Les feuilles selon l'invention sont empilées les unes sur les autres sans s'emboîter les unes dans les autres et sans interposer de feuilles de papier temporaires protégeant les masses adhésives. Aucune opération supplémentaire de pose de feuilles de papier protectrices n'est nécessaire lors de l'empilement des feuilles et aucune opération supplémentaire de retrait de feuilles de papier protectrices n'est nécessaire avant la pose de feuilles par application des masses adhésives contre la tôle d'éléments de carrosserie, ce qui réduit le coût de stockage, transport et pose des feuilles.

La saillie s'étend dans une zone à proximité de la masse adhésive qui peut se trouver bien souvent en partie radialement à l'intérieur et/ou parfois en partie radialement à l'extérieur du chemin suivi par la masse adhésive par rapport à une zone centrale de la feuille, et ainsi constitue une entretoise pouvant supporter seule une autre feuille sans que cette dernière soit au contact de toute la masse adhésive. Deux feuilles de l'invention empilées ne s'emboîtent pas l'une dans l'autre ce qui évite que la face de l'une des feuilles soit au contact de toute la masse adhésive de l'autre feuille.

La saillie est intégrée à la feuille au cours du thermoformage de celle-ci et est donc constituée par la même matière thermoplastique que la feuille ce qui en pratique n'augmente pas le coût de fabrication de la feuille malgré la présence de la saillie.

Selon une autre caractéristique de l'invention, la feuille peut comprendre au moins un ou plusieurs plots thermoformés ayant une hauteur sensiblement supérieure à l'épaisseur de la masse adhésive, et situés dans une zone centrale sur au moins l'une des faces de la feuille afin d'éviter au moins partiellement un fléchissement ou gauchissement de la feuille lorsqu'elle posée à plat ou empilée avec d'autres feuilles selon l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :
- la figure 1 est une vue en coupe transversale schématique d'une partie de portière de véhicule automobile comprenant une feuille selon l'invention ;
- les figures 2 et 3 sont des vues schématiques en coupe transversale et de dessus d'une feuille selon une première réalisation de l'invention ;
- la figure 4 est une vue en coupe transversale schématique d'une pile de quatre feuilles selon la première réalisation ;
- la figure 5 est une vue en coupe transversale schématique d'une feuille selon une deuxième réalisation de l'invention ; et
- la figure 6 est une vue de dessus schématique d'une feuille selon l'invention selon une troisième réalisation de l'invention.

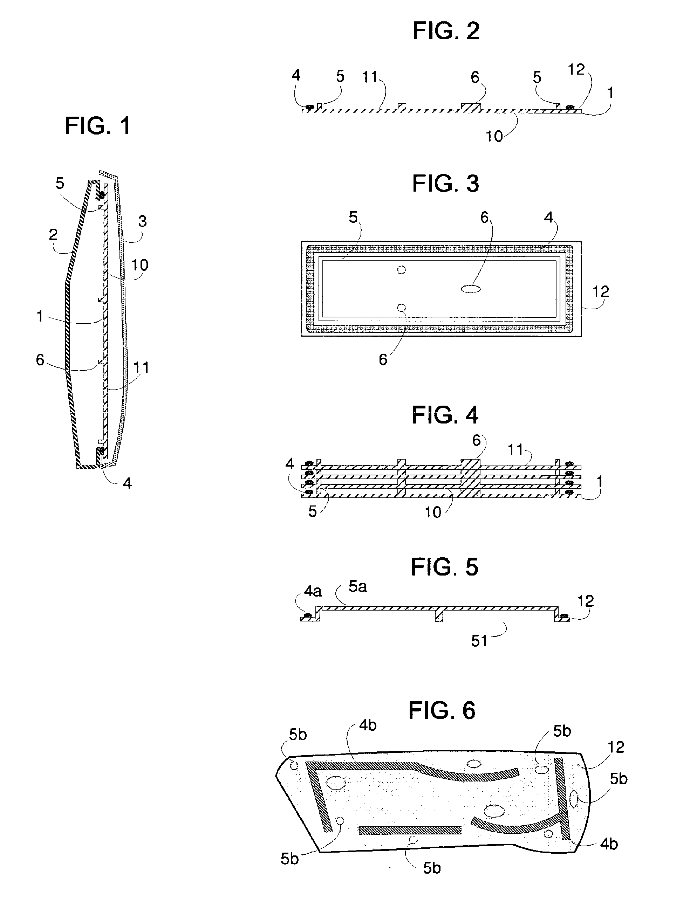

En référence à la figure 1, une feuille 1 notamment pour étanchéité et/ou isolation acoustique ou absorption acoustique est fixée notamment par collage sur la face interne d'une tôle support 2 de doublure intérieure d'un caisson de portière de véhicule automobile. La feuille 1 est recouverte d'un panneau de finition 3 constituant une garniture intérieure comportant bien souvent des équipements tels qu'un accoudoir, un cendrier et un vide-poche, ainsi que des moyens de commande de la montée et de la descente d'une vitre. Le panneau 3 est fixé sur la tôle 2 classiquement par exemple par des vis ou des pions en forme de sapin.

La face 10 de la feuille 1 orientée vers le panneau de finition 3 et l'intérieur de l'habitacle du véhicule peut éventuellement comporter un film ou une couche d'une autre matière thermoplastique ou une couche de matière fibreuse afin de constituer un panneau thermoformé notamment pour étanchéité et/ou isolation acoustique ou absorption acoustique, et/ou tout autre moyen permettant de renforcer la rigidité, d'améliorer les qualités d'étanchéité, d'insonorisation et/ou d'isolation thermique de la feuille et/ou d'améliorer son aspect.

La feuille 1 est moulée en une matière thermoplastique compacte ou cellulaire à cellules fermées, par exemple en mousse de polyoléfine, de polyéthylène ou de polypropylène. La feuille 1 est thermoformée pour avoir une forme générale sensiblement plane, et est parfois galbée à certains endroits pour former des creux et/ou des bosses s'adaptant à la forme de la tôle 2 et du panneau 3.

Comme montré aux figures 2 et 3, la face 11 de la feuille 1 orientée vers l'intérieur du caisson de portière de véhicule automobile et vers l'extérieur de l'habitacle du véhicule a un bord périphérique 12 qui supporte une masse adhésive comme un cordon de matière adhésive 4 pour assurer la fixation de la feuille 1 sur la tôle support 2. Le cordon 4 s'étend de façon continue ou discontinue le long du bord périphérique 12 en suivant sensiblement le contour de la tôle support 2 et éventuellement le contour d'une ou plusieurs ouvertures dans la feuille. La largeur du bord périphérique 12 est par exemple de 30 à 40 mm environ et a l'épaisseur initiale de la feuille 1, soit 0,15 mm environ à 1 mm environ lorsque la feuille est en matière compacte, ou bien 1 mm environ à 6 mm environ lorsque la feuille est en matière cellulaire.

Selon une réalisation connue, le cordon de matière adhésive 4 a une section circulaire ou approximativement circulaire et est sous forme de mousse pour s'écraser plus facilement quand il est appliqué sur la tôle support de portière. Le cordon est déposé de manière continue ou discontinue, suivant un tracé pouvant être sinueux, au pistolet ou au moyen d'un outil à buse le long du bord périphérique 12 de la feuille 1.

Un tel cordon de matière adhésive peut être facilement écrasable sur des longueurs plus ou moins importantes lors du stockage, du transport et de la manutention des feuilles, ce qui peut conduire à des défauts de collage des feuilles sur les portes de véhicule.

Selon une autre réalisation connue (FR 2 837 156), le cordon 4 est en une matière adhésive compacte ou sensiblement compacte, par exemple à base de matière acrylique en solution aqueuse ou dans un solvant organique, et a une section transversale oblongue avec une épaisseur inférieure à sa largeur et conserve une largeur sensiblement constante sur toute sa longueur. La section transversale du cordon peut être sensiblement rectangulaire, ou sensiblement semi-elliptique avec un grand axe parallèle à la face 11 de la feuille 1 et un petit axe perpendiculaire à la face 11 de la feuille 1. Le cordon 4 est déposé à chaud par extrusion ou par pulvérisation. Cette forme particulière du cordon de matière adhésive réduit beaucoup les risques d'écrasement lors du stockage, du transport ou de la manutention des feuilles.

L'épaisseur du cordon 4 est typiquement de l'ordre de 1 mm environ à 6 mm environ.

Selon une autre réalisation, la masse adhésive est déposée sur sous forme de films sur la feuille, par exemple par enduction, pour constituer un revêtement adhésif, analogue à un "cordon" adhésif mince.

La face 11 de la feuille 1 supportant le cordon de matière adhésive 4 comprend au moins une saillie 5 qui vient directement du thermoformage de la feuille. Selon la réalisation des figures 2 et 3, la saillie 5 s'étend sensiblement parallèlement au cordon 4, à l'intérieur du dépôt rectangulaire du cordon 4 qui longe le bord périphérique 12 de la feuille 1 qui est rectangulaire dans cette réalisation.

La saillie 5 a une hauteur sensiblement supérieure à l'épaisseur du cordon 4. La différence entre la hauteur de la saillie 5 et l'épaisseur du cordon de matière adhésive 4 est par exemple de quelques dixièmes de millimètre à quelques centimètres en fonction de rigidité de la feuille et de la distance entre la saillie et le cordon. La saillie 5 est localisée à proximité du cordon, à quelques millimètres, afin que lors du stockage et du transport d'une pile de feuilles sans feuille de papier protectrice temporaire, comme montré à la figure 4, le bord périphérique de la face 10 d'une deuxième feuille s'appuie sur le sommet de la saillie 5 de la première feuille sans que la face 10 de la deuxième feuille vienne au contact du cordon 4 sur la face 11 de la première feuille.

Les saillies des feuilles ont un profil tel que, lorsque deux feuilles sont empilées, les saillies 5 des feuilles ne s'emboîtent pas l'une dans l'autre. En d'autres termes, la face 10 de l'une supérieure des feuilles empilées ne s'emboîte pas sur l'autre face 11 d'une face d'une feuille inférieure, et au moins une saillie 5, respectivement des saillies 5 sur la face 11 de la feuille inférieure ne s'emboîte pas dans au moins un, respectivement des creux sur la face 10 de la feuille puisqu'au moins une, respectivement des saillies sur la face 11 d'une feuille n'ont pas des sections transversales complémentaires de creux sur l'autre face 10 de la feuille. L'empilement sans emboîtement des feuilles par exemple grâce aux petits côtés d'une saillie 10 perpendiculaires aux faces de la feuille et à la section transversale interne des creux dans les saillies contenue dans la section transversale externe des saillies, et/ou grâce à une ou des saillies pleines de matière participe conjointement à une hauteur des saillies sensiblement supérieure à l'épaisseur du cordon de matière adhésive 4 à la conservation de la forme et de l'adhésivité du cordon de matière adhésive.

Les cordons de matière adhésive 4 sont ainsi protégés par un recouvrement sans contact dommageable des bords périphériques des feuilles empilées et ne sont pas sollicités par une quelconque adhérence à un matériau telle qu'une feuille de papier protectrice ce qui préserve les qualités d'adhésivité du cordon de la feuille pour l'application ultérieure du cordon sur un élément de carrosserie tel qu'un caisson de portière de véhicule automobile 2. Avant la pose d'une feuille sur l'élément de carrosserie, le retrait de la feuille de la pile de feuilles est aisé puisque son cordon n'adhère à aucune feuille sous-jacente ce qui nécessite moins d'effort et de précaution qu'une feuille de la technique antérieure adhérant par son cordon à une feuille de papier protectrice.

La pile de feuilles montrée à la figure 4 peut être retournée et ainsi stockée et transportée sans atténuer les avantages précédents de la feuille selon l'invention.

En variante, la saillie qui est adaptée à être appliquée contre la face 10 d'une autre feuille peut être conformée selon la surface d'application du cordon 4 en un polyèdre plein plus ou moins régulier, par exemple parallélépipédique ou octogonal, ou en un bloc à section circulaire ou elliptique, à la base duquel chemine le cordon de matière adhésive continu ou discontinu 4a sur le bord périphérique 12. Toutefois afin de diminuer la matière thermoplastique nécessaire au thermoformage de la feuille 1 dans un moule, la saillie 5a peut être creuse comme montré à la figure 5, la saillie pouvant être allégée par des trous borgnes 51 et/ou traversiers perpendiculaires aux faces de feuille. La saillie 5a peut avoir une épaisseur de matière thermoplastique constante égale à celle de la feuille et le profil en coupe transversale de la feuille est alors en U.

La saillie selon l'invention est localisée à un emplacement sur la face 11 de la feuille de sorte qu'elle n'entrave pas la pose de la feuille sur l'élément de carrosserie 1, par exemple en étant positionnée dans un creux ou des creux de l'élément de carrosserie après l'application du cordon contre l'élément de carrosserie.

L'emplacement de saillies sur une face, ou les deux faces d'une feuille donnée, doit parfois satisfaire à un environnement spécifique dans un élément de carrosserie pour véhicule automobile si bien que les saillies peuvent être réparties pour n'éviter que partiellement un contact entre la masse adhésive et une feuille empilée sur la feuille donnée et donc un fléchissement ou un gauchissement de la feuille empilée. En d'autres termes, la feuille empilée peut être en contact avec certaines parties de la masse adhésive de la feuille donnée tout en assurant une conservation de l'adhésivité requise de la masse adhésive et une facilité de prélèvement de la feuille empilée depuis la feuille donnée.

La saillie peut être continue comme montré à la figure 2, ou être discontinue comme montré à la figure 6. Plus généralement la saillie peut s'étendre dans une zone à proximité de la masse adhésive qui se trouve en partie radialement à l'intérieur et/ou en partie radialement à l'extérieur du chemin suivi par la masse adhésive par rapport à une zone centrale de la feuille.

Selon la figure 6, la saillie comprend des plots 5b par exemple cylindriques ou elliptiques, ou des plots en forme de cornière ou de tronc de cône, perpendiculaires à la face 11 de la feuille et réparties judicieusement sur celle-ci à proximité du cordon discontinu 4b et en dépendance de la surface d'application de cordon offerte par l'élément de carrosserie. La hauteur des plots 5b est sensiblement supérieure à l'épaisseur du cordon 4b.

Un ou plusieurs plots 6 peuvent être prévus sur une zone centrale de la feuille afin d'éviter ou tout au moins atténuer un fléchissement de celle-ci lorsqu'elle est empilée sur une autre feuille selon l'invention, comme montré aux figures 2 à 4. Le ou les plots 6 sont alors thermoformés à une hauteur sensiblement supérieure à l'épaisseur du cordon de matière adhésive et sont réparties sur l'une et/ou l'autre des faces 10 et 11 de la feuille en fonction de la surface d'application de cordon offerte par l'élément de carrosserie 2 et de la forme du panneau de finition 3. Lorsque des plots 6 sont à la fois thermoformés sur les deux faces 10 et 11 de la feuille, les plots 6 sont répartis de sorte que des plots ne soient pas superposés perpendiculairement à la feuille afin de faciliter l'empilement de feuilles à plat. De préférence la saillie 5, 5a, 5b et les plots 6 ont la même hauteur.

Optionnellement, le sommet des saillies 5, 5a, 5b et éventuellement le sommet des plots centraux 6 selon l'invention sont recouverts par une couche anti-adhérente afin d'améliorer encore la séparation de la feuille d'une pile de feuilles notamment lorsque l'environnement est chaud ce qui augmente l'adhésivité de la matière thermoplastique constituant la feuille. La couche anti-adhérente est par exemple un vernis à base de silicone ou à base de d'un dérivé fluoré tel que le tétra-fluoroéthylène (PTFE).

## Revendications

1. Feuille en matière thermoplastique (1) ayant une face supportant une masse adhésive (4) destinée à être appliquée contre une tôle (2) d'un élément de carrosserie de véhicule, **caractérisée en ce que** ladite face supportant la masse adhésive comprend au moins une saillie (5) ayant une hauteur sensiblement supérieure à l'épaisseur de la masse adhésive (4), située au moins partiellement à proximité de la masse adhésive et thermoformée avec la feuille, de sorte que lors de l'empilement d'une deuxième feuille, la deuxième feuille soit au moins partiellement supportée par la saillie.

2. Feuille selon la revendication 1, **caractérisée en ce que** la saillie (5) s'étend sensiblement parallèlement à la masse adhésive (4).

3. Feuille selon la revendication 1 ou 2, **caractérisée en ce que** la saillie (5a) est partiellement creuse.

4. Feuille selon l'une quelconque des revendications 1 à 3, **caractérisée en ce que** la saillie (5b) s'étend dans une zone à proximité de la masse adhésive qui se trouve radialement en partie à l'intérieur et/ou en partie à l'extérieur du chemin suivi par la masse adhésive (4b) par rapport à une zone centrale de la feuille.

5. Feuille selon l'une quelconque des revendications 1 à 4, **caractérisée en ce que** la saillie comprend des plots (5b).

6. Feuille selon l'une quelconque des revendications 1 à 5, **caractérisée en ce que** le sommet de la saillie est recouvert par une couche anti-adhérente.

7. Feuille selon l'une quelconque des revendications 1 à 6, **caractérisée en ce qu'**elle comprend au moins un plot thermoformé (6) ayant une hauteur sensiblement supérieure à l'épaisseur de la masse adhésive (4) et situé dans une zone centrale sur l'une des faces (10, 11) de la feuille.

8. Feuille selon l'une quelconque des revendications 1 à 7, **caractérisée en ce que** la saillie (5) sur une face (11) de la feuille ne s'emboîte pas dans un creux sur l'autre face (10) de deuxième feuille.

9. Panneau en particulier pour un élément de carrosserie de véhicule, comprenant une feuille (1) en matière thermoplastique selon l'une quelconque des revendications 1 à 7, ayant une face supportant une masse adhésive (4) destinée à être appliquée contre une tôle (2) d'un élément de carrosserie de véhicule, et une couche d'une autre matière.

10. Élément de carrosserie pour véhicule automobile, comprenant une feuille en matière thermoplastique (10) selon l'une quelconque des revendications 1 à 7, ayant une face supportant une masse adhésive (4) destinée à être appliquée contre une tôle (2) d'un élément de carrosserie du véhicule.

## Claims

1. Thermoplastic material sheet (1) having one face supporting an adhesive mass (4) intended to be applied against a plate (2) of a vehicle body component, **characterised in that** said face supporting the adhesive mass comprises at least one projection (5) having a substantially greater height than the thickness of the adhesive mass (4), situated at least partially in the vicinity of the adhesive mass and thermoformed with the sheet, such that, when stacking a second sheet, the second sheet is at least partially supported by the projection.

2. Sheet according to claim 1, **characterised in that** the projection (5) extends substantially parallel with the adhesive mass (4).

3. Sheet according to claim 1 or 2, **characterised in that** the projection (5a) is partially hollow.

4. Sheet according to any of claims 1 to 3, **characterised in that** the projection (5b) extends into a zone in the vicinity of the adhesive mass situated radially in part inside and/or in part outside the path followed by the adhesive mass (4b) in relation to a central zone of the sheet.

5. Sheet according to any of claims 1 to 4, **characterised in that** the projection comprises contact blocks (5b).

6. Sheet according to any of claims 1 to 5, **characterised in that** the vertex of the projection is coated with an anti-adherent coating.

7. Sheet according to any of claims 1 to 6, **characterised in that** it comprises at least one thermoformed contact block (6) having a substantially greater height than the thickness of the adhesive mass (4) and situated in a central zone on one of the faces (10, 11) of the sheet.

8. Sheet according to any of claims 1 to 7, **characterised in that** the projection (5) on one face (11) of the sheet does not fit into a hollow on the other face (10) of the second sheet.

9. Panel particularly for a vehicle body component, comprising a thermoplastic material sheet (1) according to any of claims 1 to 7, having a face supporting an adhesive mass (4) intended to be applied against a plate (2) of a vehicle body component, and a coating of another material.

10. Motor vehicle body component, comprising a thermoplastic material sheet (10) according to any of claims 1 to 7, having a face supporting an adhesive mass (4) intended to be applied against a plate (2) of a vehicle body component.

## Patentansprüche

1. Folie aus thermoplastischem Material (1), die eine Seite aufweist, auf der eine Klebemasse (4) aufgetragen ist, die dazu bestimmt ist an einem Blech (2) eines Fahrzeugkarosseriebauteils angebracht zu werden, **dadurch gekennzeichnet, dass** die besagte Seite, auf der die Klebemasse aufgetragen ist, zumindest einen Vorsprung (5) aufweist, dessen Höhe merklich größer ist, als die Dicke der Klebemasse (4), und der sich zumindest teilweise in der Nähe der Klebemasse befindet, und mit der Folie warmverformt wird, sodass beim Aufstapeln einer zweiten Folie diese zweite Folie zumindest teilweise vom Vorsprung getragen wird.

2. Folie nach Anspruch 1, **dadurch gekennzeichnet, dass** sich der Vorsprung (5) merklich parallel zur Klebemasse (4) erstreckt.

3. Folie nach Anspruch 1 oder 2, **dadurch gekennzeichnet, dass** der Vorsprung (5a) teilweise hohl ist.

4. Folie nach irgendeinem der Ansprüche 1 bis 3, **dadurch gekennzeichnet, dass** sich der Vorsprung (5b) über einen Bereich in der Nähe der Klebemasse erstreckt, der sich radial teilweise im Inneren und/ oder im Äußeren des Verlaufes befindet, den die Klebemasse (4b) in Bezug auf einen zentralen Bereich der Folie einschlägt.

5. Folie nach irgendeinem der Ansprüche 1 bis 4, **dadurch gekennzeichnet, dass** der Vorsprung Klötze (5b) enthält.

6. Folie nach irgendeinem der Ansprüche 1 bis 5, **dadurch gekennzeichnet, dass** der höchste Punkt des Vorsprungs mit einer Antihaftschicht überzogen ist.

7. Folie nach irgendeinem der Ansprüche 1 bis 6, **dadurch gekennzeichnet, dass** sie zumindest einen warmgeformten Klotz (6) enthält, dessen Höhe merklich größer als die Dicke der Klebemasse (4) ist, und der sich in einem zentralen Bereich auf einer Seite (10, 11) der Folie befindet.

8. Folie nach irgendeinem der Ansprüche 1 bis 7, **dadurch gekennzeichnet, dass** sich der Vorsprung (5) auf einer Seite (11) der Folie nicht in eine Vertiefung auf der anderen Seite (10) der zweiten Folie einfügt.

9. Platte im Speziellen für ein Fahrzeugkarosseriebauteil mit einer Folie (1) aus thermoplastischem Material nach irgendeinem der Ansprüche 1 bis 7, mit einer Seite, auf der eine Klebemasse (4) aufgetragen ist, die dazu bestimmt ist, an einem Blech (2) eines Fahrzeugkarosseriebauteils angebracht zu werden, und einer Schicht aus einem anderen Material.

10. Karosseriebauteil für ein Fahrzeug mit einer Folie aus thermoplastischem Material (10) nach irgendeinem der Ansprüche 1 bis 7, mit einer Seite, auf der eine Klebemasse (4) aufgetragen ist, die dazu bestimmt ist an einem Blech (2) eines Fahrzeugkarosseriebauteils angebracht zu werden.
